(19) Europäisches Patentamt
European Patent Office
Office européen des brevets

(11) Veröffentlichungsnummer: **0 113 061**
**A2**

(12) **EUROPÄISCHE PATENTANMELDUNG**

(21) Anmeldenummer: **83112076.1**

(22) Anmeldetag: **01.12.83**

(51) Int. Cl.³: **C 08 F 220/10**
C 08 F 226/00
//(C08F220/10, 226/00),
(C08F226/00, 220/10)

(30) Priorität: **08.12.82 DE 3245298**

(43) Veröffentlichungstag der Anmeldung:
**11.07.84 Patentblatt 84/28**

(84) Benannte Vertragsstaaten:
**AT BE CH DE FR GB LI NL**

(71) Anmelder: **BASF Aktiengesellschaft**
**Carl-Bosch-Strasse 38**
**D-6700 Ludwigshafen(DE)**

(72) Erfinder: **Gimpel, Juergen, Dr.**
**Osloer Weg 44**
**D-6700 Ludwigshafen(DE)**

(72) Erfinder: **Schwendemann, Volker, Dr.**
**Robert-Stolz-Strasse 17**
**D-6730 Neustadt(DE)**

(72) Erfinder: **Sander, Hans, Dr.**
**Petersstrasse 2**
**D-6700 Ludwigshafen(DE)**

(72) Erfinder: **Spoor, Herbert, Dr.**
**Woogstrasse 44**
**D-6703 Limburgerhof(DE)**

(72) Erfinder: **Osterloh, Rolf, Dr.**
**Am Wehrhaus 16 a**
**D-6718 Gruenstadt(DE)**

(54) **Isocyanatgruppen enthaltendes Copolymerisat.**

(57) Die Erfindung betrifft ein Isocyanatgruppen enthaltendes Copolymerisat und dessen Herstellung.

Das Isocyanatgruppen enthaltende Copolymerisat enthält einpolymerisiert

5 bis 60 Gew.-% eines N(1-alkenyl)isocyanats und

95 bis 40 Gew.-% mindestens eines (Meth-)acrylsäureesters, der teilweise durch weitere copolymerisierbare olefinisch ungesättigte Verbindungen, die keine OH-, CH-, NH- oder SH-aciden Gruppen enhalten, ersetzt sein können, und weist ein mittleres Molekulargewicht von 500 bis 10 000 auf.

Die Herstellung des Copolymerisats erfolgt durch radikalisch thermische oder Redox-initiierte Copolymerisation.

EP 0 113 061 A2

Isocyanatgruppen enthaltendes Copolymerisat

Die vorliegende Erfindung betrifft ein Isocyanatgruppen enthaltendes Copolymerisat und dessen Herstellung durch radikalische, thermische Copolymerisation.

Copolymerisate, die Vinylisocyanat einpolymerisiert enthalten, sind bekannt. So beschreiben Y. Iwakura, M. Sato, T. Tamikado und T. Mizoguchi Copolymerisate aus Vinylisocyanat und Styrol, Methylmethacrylat, Vinylidenchlorid, Methylacrylat oder Acrylnitril. Die Polymerisate werden in zugeschmolzenen Glasampullen bei 60°C bis zu einem Umsatz von 3 bis 7 Gew.-% polymerisiert (Konbunshi Kagaku, 13, 390 (1956)).

G.B. Butler und S.B. Monroe beschreiben in Journ. Macromol. Sci. Chem. A5 (1971) Nr. 6, S. 1063-70 Copolymere aus Styrol oder Methylmethacrylat mit bis zu 57 Gew.-% Vinylisocyanat. Die Polymerisation wurde in zugeschmolzenen Glasampullen mit Benzoylperoxid bei Raumtemperatur mit Hilfe von UV-Licht durchgeführt. Der Umsatz bei den Copolymerisaten betrug von 15 bis 83 %. Diese Produkte enthalten also noch erhebliche Mengen an toxikologisch bedenklichen Restmonomeren. Die meisten so erhaltenen Copolymeren waren unlösliche Produkte und somit zur Verwendung in Polyurethan-Systemen oder Polyurethanlacken ungeeignet.

In der DE-AS 12 03 470 werden Copolymerisate des Ethylens mit Vinyl- und Isopropenylisocyanat beschrieben. Die Polymerisation wird bei 100 bis 250°C und Drücken von 200 bis 2000 at durchgeführt. Unter diesen Reaktionsbedingungen können nur bis zu 30 Gew.-% Vinylisocyanat in das Mischpolymerisat eingebaut werden. Auch bedingen die hohen Polymerisationstemperaturen einen erheblichen Verlust an NCO-Reaktivität. Der NCO-Wert dieser Mischpolymerisate liegt 10 bis 60 % tiefer als theoretisch zu erwarten ist.

In der US-PS 3,715,336 werden Copolymerisate aus Vinylacetat und bis zu 40 Mol-% Vinylisocyanat beschrieben. Die Polymerisation wird bei 40°C mit Hilfe eines Peroxids durchgeführt und dauert 24 bis 93 Stunden. Dieses Verfahren ist für technische Anwendungen unwirtschaftlich und die entstandenen Mischpolymerisate sind für eine lacktechnische Anwendung ungeeignet, da sie eine zu geringe Wasserfestigkeit und eine unzureichende Witterungsbeständigkeit aufweisen.

Copolymerisate aus Vinylchlorid, Vinylacetat und bis zu 10 Gew.-% Vinylisocyanat beschreiben J.T.K. Woo und D.H. Heinert in J. Coat. Techn. 49, No. 632, 82 ff. Diese Polymerisate werden radikalisch mit Azobisisobutyro-

0113061

nitril unter Druck hergestellt. Ein Nachteil dieses Herstellungsverfahrens ist, daß der Umsatz maximal 65 % beträgt. Die hierbei noch verbleibenden großen Mengen an toxikologisch bedenklichen Restmonomeren müssen durch einen zusätzlichen Verfahrensschritt entfernt werden.

Die radikalische Copolymerisation ungesättigter Isocyanate mit Vinylchlorid beschreiben auch Höring, Kleine und Ulbricht in Journ. f. prakt. Chemie, Bd. 320, Heft 3, S. 473 ff (1978). Die Copolymerisation wurde hierbei mit Azobisisobutyronitril bei 50°C in Glasmapullen durchgeführt. Die Verwendung von mehr als 10 Mol-% Vinylisocyanat führte zu unlöslichen Produkten. Auch bei diesem Polymerisationsverfahren liegt der Umsatz unter 85 %, so daß in einem zusätzlichen Verfahrensschritt ein großer Anteil an Restmonomeren entfernt werden muß.

Ebenfalls bekannt sind Polyisocyanate, hergestellt z.B. durch Di- oder Trimerisierung von Diisocyanaten wie Toluylendiisocyanat, Isophorondiisocyanat oder Hexamethylendiisocyanat oder durch Umsetzung von Diisocyanaten mit Di-, Tri- oder Polyolen, so daß etliche NCO-Gruppen frei bleiben. Derartige Produkte enthalten jedoch immer noch etwas Diisocyanat, das als Ausgangsprodukt verwendet wurde. Diese als Ausgangsprodukte verwendeten Diisocyanate müssen aus toxikologischen Gründen durch aufwendige zusätzliche Verfahrensschritte wie z.B. eine Extraktion aus dem hergestellten Polyisocyanat entfernt werden.

Aufgabe der vorliegenden Erfindung ist es, ein Copolymerisat und ein Verfahren zu seiner Herstellung aufzuzeigen, das die genannten Nachteile nicht mehr aufweist und zudem eine große Variationsbreite in Bezug auf sein mittleres Molekulargewicht, seine Glastemperatur und seinen NCO-Gehalt aufweist.

Überraschenderweise gelang es durch drucklose radikalische, thermische Copolymerisation, gegebenenfalls in einem organischen Lösungsmittel, das gegen Isocyanatgruppen inert ist, lösliche Copolymerisate mit einem N(1--alkenyl)isocyanat als Comonomeren herzustellen, dessen Umsatz schon innerhalb von bis zu 10 Stunden über 95 Gew.-% liegt.

Gegenstand der vorliegenden Erfindung ist ein Isocyanatgruppen enthaltendes Copolymerisat, das dadurch gekennzeichnet ist, daß es drucklos, gegebenenfalls in Gegenwart eines inerten organischen Lösungsmittels durch radikalisch thermische oder Redox-initiierte Copolymerisation bis zu einem Umsatz von mindestens 85 % hergestellt wurde und einpolymerisiert enthält

(I) 5 bis 60 Gew.-% eines N(1-alkenyl)isocyanats und

(II) 95 bis 40 Gew.-% mindestens eines Esters der Acrylsäure oder Methacrylsäure mit einem 1 bis 20 Kohlenstoffatome enthaltendem Monoalkohol, wobei bis zu 50 Gew.-% der Ester der Acrylsäure oder Methacrylsäure durch eine oder mehrere, damit copolymerisierbare, von (I) verschiedene olefinisch ungesättigte Verbindungen, die keine OH-, CH-, NH- oder SH-aciden Gruppen enthalten, ersetzt sein können,

mit der Maßgabe, daß die Summe der unter (I) und (II) genannten Prozentzahlen 100 ist und das Copolymerisat ein mittleres Molekulargewicht von 500 bis 10 000 aufweist.

Als Komponente (II) werden vorzugsweise Ester der Acrylsäure oder Methacrylsäure mit 1 bis 20 Kohlenstoffatome enthaltenden Monoalkoholen verwendet.

Gegenstand der vorliegenden Erfindung ist auch ein Verfahren zur Herstellung der erfindungsgemäßen Copolymerisate durch drucklose radikalisch thermische oder Redox-initiierte Copolymerisation der Monomeren, gegebenenfalls in einem gegenüber Isocyanatgruppen inerten organischen Lösungsmittel, bis zu einem Umsatz von mindestens 85 %, vorzugsweise 95 % innerhalb von 10 Stunden, vorzugsweise bei Temperaturen über 40 und unter 80°C.

Zu den Aufbaukomponenten der erfindungsgemäßen Copolymerisate ist im einzelnen folgendes auszuführen.

(I) Als N(1-alkenyl)isocyanat (I) können Isocyanate mit 2 bis 4 Kohlenstoffatomen in der Alkenylgruppe verwendet werden, wie Vinylisocyanat, Propenylisocyanat und Isopropenylisocyanat. Die Menge an einpolymerisiertem N(1-alkenyl)isocyanat beträgt 5 bis 60, vorzugsweise 10 bis 40 Gew.-%. Besonders bevorzugt sind Mischpolymerisate mit 15 bis 35 Gew.-% Vinyl-, Propenyl- oder Isopropenylisocyanat.

(II) Als Ester der Acrylsäure oder Methacrylsäure mit 1 bis 20 Kohlenstoffatome enthaltenden Monoalkoholen können z.B. verwendet werden Methyl-, Ethyl-, Propyl-, Butyl-, 2-Ethylhexyl- oder Lauryl-acrylat oder -methacrylat, sowie Acrylsäure- und Methacrylsäureester mit 3 bis 20 Kohlenstoffatome enthaltenden Monoalkoholen, die Ether- oder Thioethergruppen enthalten, wie z.B. Methylglykol(meth)acrylat oder Methyldiglykol(meth)acrylat. Diese Acrylsäure- oder Methacrylsäureester können bis zu 50 Gew.-% durch eine oder mehrere weitere, damit

copolymerisierbare olefinisch ungesättigte Verbindungen, die keine OH-, CH-, NH- oder SH-acide Gruppen enthalten, ersetzt sein, wie z.B. durch Acrylnitril, Methacrylnitril, Dihydrodicyclopentadienylacrylat, Vinylether, wie Vinylmethylether, Vinylethylether, Vinylpropylether, Vinylisobutylether, Vinyl-2-ethylhexylether, Vinyloctadecylether, Vinylpropionat oder Vinylbenzoat, Maleinsäureanhydrid, Tetrahydrophthalsäureanhydrid, Diester der Maleinsäure, Itaconsäure, Citraconsäure oder Mesaconsäure mit, gegebenenfalls Ether- oder Thioethergruppen enthaltenden, Monoalkoholen mit 1 bis 20 Kohlenstoffatomen, wie z.B. Maleinsäuredimethylester, -diethylester, -dipropylester, -dibutylester, -di-2-ethylhexylester oder -dilaurylester, Crotonsäureester mit 1 bis 20 Kohlenstoffatome enthaltenden Monoalkoholen, wie Crotonsäuremethyl-, -ethyl-, -propyl-, -butyl-, -2-ethylhexyl- oder -laurylester, heterocyclische N-Vinylverbindungen wie N-Vinyl-pyrrol, N-Vinylpyrrolidin, N-Vinylpyrrolidon, N-Vinyl--1,2,3,4-tetrahydrochinolin, N-Vinylpiperidin, N-Vinylcaprolactam, N-Vinylcarbazol, N-Vinylimidazol, N-Vinyl-2-methylimidazol, Vinylaromaten wie Styrol, p-tert.-Butylstyrol, Vinyltoluol, -Methylstyrol, Monoolefine mit 4 bis 20 Kohlenstoffatomen wie Penten, Hexen, Isobutylen und Diolefine wie Isopren, sowie Acrylsäure- und Methacrylsäureester mit Monoalkoholen der Struktur

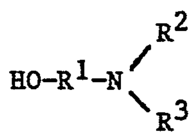

worin $R^1 = -C_nH_{2n}-$
$R^2$, $R^3 = C_nH_{2n} + 1$ und
n = 1 bis 20, vorzugsweise 1 bis 8 bedeutet,

wie z.B. Diethylaminoethylacrylat und Dimethylaminoethylacrylat. Bevorzugt als Komponente (II) sind (Meth-)acrylsäureester. Es können auch Mischungen der genannten Monomeren verwendet werden. Die Menge an copolymerisierbaren ethylenisch ungesättigten Verbindungen (II) beträgt 40 bis 95, vorzugsweise 60 bis 90 Gew.-%. Besonders bevorzugt sind Copolymerisate mit 65 bis 85 Gew.-% der genannten Acryl- und Methacrylsäureester.

Die Herstellung der erfindungsgemäßen Copolymerisate erfolgt durch drucklose radikalisch thermische Copolymerisation, vorzugsweise in organischer Lösung. "Drucklos" bedeutet, daß bei der Herstellung des Copolymerisats im wesentlichen kein Druckunterschied zwischen dem Innenraum des Polymerisationsgefäßes und der Umgebung besteht.

Als Radikalinitiatoren können beispielsweise Azoverbindungen wie Azobisisobutyronitril, 2,2'-Azobis-(2,4-dimethylvaleronitril) und/oder Peroxide wie Diisopropylperoxiddicarbonat, t-Butylcyclohexylperoxidicarbonat, Benzoylperoxid, t-Butylperoktoat, t-Butylperbenzoat usw. im allgemeinen in Mengen von 1 bis 10 Gew.-%, vorzugsweise 2 bis 5 Gew.-%, bezogen auf die eingesetzten Monomeren verwendet werden. Besonders bevorzugt sind folgende Initiatoren: Azobisisobutyronitril, 2,2'-Azobis-(2,4-dimethylvaleronitril) und t-Butylcyclohexylperoxidicarbonat.

Redoxinitiierte Copolymerisation kann beispielsweise mit den genannten Radikalinitiatoren in Kombination mit üblichen Beschleunigern, wie Kobaltoktoat oder Vanadyltosylat, im allgemeinen in Mengen von 0,01 bis 0,1 Gew.-%, bezogen auf die eingesetzten Monomeren (I) und (II) durchgeführt werden.

Auch Regler können bei der Copolymerisation mitverwendet werden, beispielsweise Tetrachlorkohlenstoff, tert.-Dodecylmercaptan, 2-Mercaptoethanol oder Diisopropylxanthogendisulfid in Mengen von bis zu 5 Gew.-%, bezogen auf die eingesetzten Monomeren. Die Copolymerisation erfolgt im allgemeinen in organischer Lösung bei Temperaturen oberhalb 40°C, vorzugsweise bei 50 bis 80°C. Als organisches Lösungsmittel können solche verwendet werden, die gegenüber Isocyanatgruppen inert sind, z.B. Ether, wie Tetrahydrofuran oder Dioxan, Ester wie Essigsäureethylester oder n-Butylacetat, Glykoletheracetate, wie Methylglykolacetat, Ethylglykolacetat, Butylglykolacetat, Ketone, wie Aceton und Cyclohexanon, Dialkylcarbonsäureamide, wie Dimethylformamid, Dimethylacetamid oder N-Methylpyrrolidon, Aromaten, wie Toluol und Xylol, aliphatische Kohlenwasserstoffe, wie z.B. Isooctan und chlorierte Kohlenwasserstoffe, wie t-Butylchlorid. Auch Gemische dieser Lösungsmittel können verwendet werden.

Die erfindungsgemäßen Copolymerisate weisen mittlere Molekulargewichte $\bar{M}_n$ zwischen 500 und 10 000, vorzugsweise zwischen 3000 und 9000 auf und können als Isocyanatkomponente in Polyurethanlacken oder Polyurethansystemen zum Einsatz kommen. Als Vernetzer können dabei Wasser, Glykole, Polyetherdiole, Polyetherpolyole, niedermolekulare Tri- oder Tetraole, OH-Polyester, OH-Polyacrylate und viele andere Verbindungen verwendet werden, die im Sinne einer Addition mit Isocyanaten reagieren. Geeignete Methoden zur Verarbeitung bzw. Herstellung von Polyurethansystemen und Polyurethanlacken sind z.B. in H. Kittel, Lehrbuch der Lacke und Beschichtungen I, 2, Seiten 512 ff angegeben.

Mit den erfindungsgemäßen Copolymerisaten erhält man so lichtechte und hochglänzende Lackfilme mit guten mechanischen Eigenschaften, wie einer

hohen Pendelhärte, einer guten Elastizität, guter Zähigkeit und Abriebfestigkeit sowie guten elektrischen Eigenschaften. Die lacktechnischen Eigenschaften können durch die Wahl der Comonomeren für die Polymerisation nach Wunsch modifiziert und damit auf den jeweiligen Verwendungszweck abgestellt werden.

Die in den Beispielen angegebenen Teile und Prozente sind, falls nicht anders angegeben, Gewichtsteile und Gewichtsprozente.

Beispiel 1

Zu einer Vorlage von 241,6 Teilen Toluol werden bei 75°C unter Stickstoff eine Mischung aus 20 Teilen Vinylisocyanat, 30 Teilen Toluol, 90 Teilen t-Butylacrylat, 90 Teilen Butylacrylat und 4 Teilen Diisopropylxanthogendisulfid innerhalb einer Stunde und eine Lösung von 8 Teilen Azobisisobutyronitril in 34,2 Teilen Aceton innerhalb von 3 Stunden gleichmäßig zudosiert. Es wird eine Stunde bei 75°C nachpolymerisiert. Dann gibt man 1 Teil Azobisisobutyronitril hinzu und polymerisiert eine Stunde bei 75°C nach. Der Umsatz beträgt 100 %. Es wird im Vakuum aufkonzentriert. Man erhält so eine 59,7 %-ige klare Lösung eines Copolymerisats, das einen NCO-Wert von 4,9 % und einen K-Wert nach Fikentscher von 19,8 aufweist.

Beispiel 2

Zu einer Vorlage von 312 Teilen Toluol werden bei 75°C unter Stickstoff eine Mischung aus 60 Teilen Vinylisocyanat, 120 Teilen Butylacrylat, 120 Teilen t-Butylacrylat, 6 Teilen Diisopropylxanthogendisulfid und 86,3 Teilen Toluol innerhalb einer Stunde und eine Lösung von 12 Teilen Azobisisobutyronitril in 51,6 Teilen Aceton innerhalb von 3 Stunden gleichmäßig zudosiert. Es wird eine Stunde bei 75°C nachpolymerisiert, dann gibt man 1,5 Teile Azobisisobutyronitril hinzu und polymerisiert noch eine Stunde bei 75°C nach. Der Umsatz beträgt 100 %. Es wird im Vakuum aufkonzentriert. Man erhält so eine 60,7 %-ige klare Lösung eines Copolymerisats, das einen NCO-Wert von 8,9 % und einen K-Wert nach Fikentscher von 19 aufweist.

Beispiel 3

Zu einer Vorlage von 300 Teilen Toluol werden bei 75°C unter Stickstoff eine Mischung aus 90 Teilen Vinylisocyanat, 105 Teilen t-Butylacrylat, 105 Teilen Butylacrylat und 90 Teilen Ethylglykolacetat innerhalb einer Stunde und eine Lösung aus 12 Teilen Azobisisobutyronitril und 60 Teilen Aceton innerhalb von 3 Stunden gleichmäßig zudosiert. Anschließend wird

noch eine Stunde bei 75°C nachpolymerisiert. Der Umsatz beträgt 100 %. Dann wird im Vakuum aufkonzentriert. Man erhält eine 60,1 %-ige klare Lösung eines Copolymerisats, das einen NCO-Wert von 16,0 % und einen K-Wert nach Fikentscher von 32,4 aufweist.

Beispiel 4

Zu einer Vorlage von 133,8 Teilen Toluol werden bei 75°C unter Stickstoff eine Mischung aus 80 Teilen Vinylisocyanat, 60 Teilen t-Butylacrylat, 60 Teilen Butylacrylat, 4 Teilen Diisopropylxanthogendisulfid und 120 Teilen Toluol innerhalb einer Stunde und eine Lösung aus 8 Teilen Azobisisobutyronitril und 34,2 Teilen Aceton innerhalb von 3 Stunden gleichmäßig zudosiert. Dann wird fünfmal im Abstand von einer Stunde 1 Teil Azobisisobutyronitril zugegeben. Anschließend wird noch eine Stunde bei 75°C nachpolymerisiert. Der Umsatz beträgt 99,7 %. Dann wird im Vakuum aufkonzentriert. Man erhält eine 58,9 %-ige klare Lösung eines Copolymerisats, das einen NCO-Wert von 18,0 % und einen K-Wert nach Fikentscher von 17,6 aufweist.

Beispiel 5

Zu einer Vorlage von 319 Teilen Toluol werden bei 60°C unter Stickstoff eine Mischung aus 60 Teilen Vinylisocyanat, 150 Teilen Methylmethacrylat, 90 Teilen 2-Ethylhexylacrylat, 6 Teilen Diisopropylxanthogendisulfid und 79,5 Teilen Toluol innerhalb einer Stunde und eine Mischung aus 12 Teilen t-Butylcyclohexylperoxidicarbonat und 51,6 Teilen Toluol innerhalb von 3 Stunden gleichmäßig zudosiert. Danach werden zweimal im Abstand von einer Stunde 1,5 Teile t-Butylcyclohexylperoxidicarbonat zudosiert. Anschließend wird noch eine Stunde bei 60°C nachpolymerisiert. Der Umsatz beträgt 98 %. Dann wird im Vakuum aufkonzentriert. Man erhält eine 59,8 %ige klare Lösung eines Copolymerisats, das einen NCO-Wert von 8,7 % und einen K-Wert nach Fikentscher von 17,6 aufweist.

Beispiel 6

Zu einer Vorlage von 287 Teilen Toluol werden bei 60°C unter Stickstoff eine Mischung aus 60 Teilen Vinylisocyanat, 120 Teilen Butylacrylat, 120 Teilen Methylmethacrylat, 6 Teilen Diisopropylxanthogendisulfid und 111,4 Teilen Ethylglykolacetat innerhalb einer Stunde und eine Mischung aus 12 Teilen 2,2'-Azobis-(2,4-dimethylvaleronitril) und 51,6 Teile Aceton innerhalb von 3 Stunden gleichmäßig zudosiert. Danach werden dreimal im Abstand von einer Stunde 1,5 Teile 2,2'-Azobis-(2,4-dimethylvaleronitril) zudosiert. Anschließend wird noch eine Stunde bei 60oC nachpoly-

merisiert. Der Umsatz beträgt 100 %. Dann wird im Vakuum aufkonzentriert. Man erhält eine 60 %-ige klare Lösung eines Copolymerisats, das einen NCO-Wert von 9,6 % und einen K-Wert nach Fikentscher von 18,4 aufweist.

Patentansprüche

1. Isocyanatgruppen enthaltendes Copolymerisat, dadurch gekennzeichnet, daß es drucklos, gegebenenfalls in Gegenwart eines inerten organischen Lösungsmittels, durch radikalisch thermische oder Redox-initiierte Copolymerisation bis zu einem Umsatz von mindestens 85 % hergestellt wurde und einpolymerisiert enthält

(I) 5 bis 60 Gew.-% eines N(1-alkenyl)isocyanats und

(II) 95 bis 40 Gew.-% mindestens eines Esters der Acrylsäure oder Methacrylsäure mit einem 1 bis 20 Kohlenstoffatome enthaltenden Monoalkohol, wobei bis zu 50 Gew.-% der Ester der Acrylsäure oder Methacrylsäure durch eine oder mehrere weitere, damit copolymerisierbare, von (I) verschiedene olefinisch ungesättigte Verbindungen, die keine OH-, CH-, NH- oder SH-acide Gruppen enthalten, ersetzt sein können,

mit der Maßgabe, daß die Summe der unter (I) und (II) genannten Prozentzahlen 100 ist und das Copolymerisat ein mittleres Molekulargewicht von 500 bis 10 000 aufweist.

2. Copolymerisat nach Anspruch 1, dadurch gekennzeichnet, daß es als Komponente (I) Vinylisocyanat einpolymerisiert enthält.

3. Verfahren zur Herstellung des Copolymerisats nach Anspruch 1 oder 2, dadurch gekennzeichnet, daß das Monomerengemisch innerhalb von 10 Stunden bis zu einem Umsatz von über 95 % copolymerisiert wird.